# EUROPÄISCHE PATENTANMELDUNG

(11) **EP 3 348 320 A1**
(43) Veröffentlichungstag der Anmeldung: **18.07.2018**
(21) Anmeldenummer: 17151346.8
(22) Anmeldetag: 13.01.2017
(51) Int. Cl.: B01D 1/00, B01D 1/16, B01D 3/34, B01D 5/00, C02F 1/04, C02F 1/12, C02F 1/16

(54) **VERFAHREN UND VORRICHTUNG ZUR KÜHLUNG EINER ELEKTROLYSEEINHEIT UND ZUR WASSERAUFBEREITUNG**

(71) Anmelder: Siemens Aktiengesellschaft, 80333 München (DE)
(72) Erfinder: Hanebuth, Marc, 90482 Nürnberg (DE); Reiner, Andreas, 91083 Baiersdorf (DE); Straub, Jochen, 91054 Erlangen (DE); Ziegmann, Markus, 91083 Baiersdorf (DE)

(57) **Zusammenfassung**

Die Erfindung betrifft ein Verfahren zur Kühlung einer Elektrolyseeinheit und zur Wasseraufbereitung mit den Schritten: Führen eines feuchten Luftstroms mit einer ersten Molmenge Wasser in eine Verdunstereinheit, Führen von Rohwasser in die Verdunstereinheit im Gegenstrom zum feuchten Luftstrom, wobei in der Verdunstereinheit eine Temperatur herrscht, die maximal der Siedetemperatur des Wassers entspricht, Verdunsten von reinem Wasser aus dem Rohwasser in den feuchten Luftstrom, Abtrennen einer zweiten Molmenge des reinen Wassers aus dem feuchten Luftstrom in einer Wasseraufbereitungseinheit, wobei eine nach der Abtrennung der zweiten Molmenge in der Luft verbleibende dritte Molmenge Wasser größer als die erste Molmenge ist.

## Beschreibung

Die Erfindung betrifft ein Verfahren und eine Vorrichtung zur Kühlung einer Elektrolyseeinheit und zur Wasseraufbereitung mittels einer Verdunstereinheit.

Die Nachfrage nach Strom schwankt im tagezeitlichen Verlauf stark. Auch die Stromerzeugung schwankt mit zunehmendem Anteil an Strom aus erneuerbaren Energien während des Tagesverlaufs. Um ein Überangebot an Strom in Zeiten mit viel Sonne und starkem Wind bei niedriger Nachfrage nach Strom ausgleichen zu können, benötigt man regelbare Kraftwerke oder Speicher, um diese Energie zu speichern.

Eine der derzeitig angedachten Lösungen ist das Umwandeln von elektrischer Energie in Wertprodukte, die insbesondere als Plattformchemikalien oder Synthesegas, welches Kohlenstoffmonoxid und Wasserstoff umfasst, dienen können. Eine mögliche Technik zur Umwandlung der elektrischen Energie in Wertprodukte stellt die Elektrolyse dar.

Die Elektrolyse von Wasser zu Wasserstoff und Sauerstoff stellt eine im Stand der Technik bekannte Methode dar. Der Eduktstrom der Wasserelektrolyse sollte entsalzenes Wasser darstellen. Weiterhin muss die in der Elektrolyse anfallende Abwärme abgeführt werden, sodass ein stabiles und robustes Kühlkonzept für die Elektrolyse benötigt wird.

Insbesondere in tropischen und subtropischen Regionen, in denen eine große Menge Sonnenenergie zur Verfügung steht, stellt das Kühlkonzept eine Herausforderung dar. Die Abwärme der Elektrolyse fällt typischerweise in einem Temperaturbereich zwischen 60 °C und 100° C, insbesondere zwischen 60 °C und 80 °C, an, was eine Kühlung bei Umgebungstemperaturen von bis zu 50° nachteilig erschwert, da die Temperaturdifferenz zwischen der Wärmequelle Elektrolyse und der Umgebungsluft so gering ist, dass nachteilig sehr große Wärmetauscher mit hohem Energiebedarf und hohen Investitionskosten benötigt werden. Weiterhin werden große Volumenströme an Kühlmedien bei diesen Temperaturen benötigt, was nachteilig einen hohen Energieverbrauch bei Pumpen und Gebläsen zur Folge hat.

Bei einer Druck-Elektrolyse kann zusätzlich das Wasser nicht direkt aus dem Elektrolysekreislauf in einen Luftkühler geführt werden, da hier in der Elektrolyseeinheit hohe Drücke herrschen. Typischerweise beträgt der Druck wenigstens 30 bar. Ein Luftkühler muss daher für hohe Drücke ausgelegt sein, was ihn nachteilig aufwendig zu gestalten und daher teuer macht.

Alternativ wird im Stand der Technik der Druck-Elektrolyse zunächst die Abwärme der Elektrolyse mit einem Wärmetauscher auf ein flüssiges Kühlmedium übertragen, welches nicht unter Druck steht. Dieses Kühlmedium wird daraufhin in einen Luftkühler geleitet, in dem es abkühlt. Nachteiligerweise muss die geringe Temperaturdifferenz zwischen der Wärmequelle Elektrolyse und der Umgebungsluft bei diesem Kühlprozess zum einen für das Übertragen der Wärme von der Elektrolyse auf das flüssige Kühlmedium und für das Übertragen der Wärme von dem flüssigen Kühlmedium auf die Umgebungsluft ausreichen. Auch hier sind nachteilig sehr große Wärmetauscher nötig, um die Elektrolyse ausreichend kühlen zu können.

Aufgabe der vorliegenden Erfindung ist es daher, ein Verfahren und eine Vorrichtung anzugeben, welche energieeffizientes Kühlen der Elektrolyseeinheit und ein Entsalzen des Wassers ermöglicht.

Die Aufgabe wird mit einem Verfahren gemäß Anspruch 1 und einer Vorrichtung gemäß Anspruch 9 gelöst.

Das erfindungsgemäße Verfahren zur Kühlung einer Elektrolyseeinheit und zur Wasseraufbereitung umfasst mehrere Schritte. Feuchte Luft mit einer ersten Molmenge an Wasser wird in eine Verdunstereinheit geführt. Rohwasser wird in die Verdunstereinheit im Gegenstrom zur feuchten Luft geführt. Dabei herrschen in der Verdunstereinheit maximal Temperaturen im Bereich der Siedetemperatur des Wassers. In der Verdunstereinheit verdunstet reines Wasser aus dem Rohwasser in die feuchte Luft, wobei das Rohwasser abkühlt. In einer Wasseraufbereitungseinheit wird dann eine zweite Molmenge des reinen Wassers aus der feuchten Luft mit Wasser abgetrennt, wobei eine nach der Abtrennung der zweiten Molmenge in der Luft verbleibende dritte Molmenge Wasser größer als die erste Molmenge ist. Das in der Verdunstereinheit abgekühlte Rohwasser wird in einen Wärmetauscher geführt. In den Wärmetauscher wird auch ein Fluidstrom einer Elektrolyseeinheit geführt, wobei Wärme von dem Fluidstrom auf das Rohwasser übertragen wird. Das im Wärmetauscher vorgewärmte Rohwasser wird in die Verdunstereinheit zurückgeführt. Der abgekühlte Fluidstrom wird zurück zur Elektrolyseeinheit geführt.

Vorteilhaft ist die feuchte Luft mit der ersten Molmenge Wasser Umgebungsluft. Das Verwenden eines nahezu trockenen Trägergases ist ebenso denkbar. In anderen Worten kann die feuchte Luft sehr wenig Wasser umfassen, aber auch nahezu mit Wasser gesättigt sein. Das in der Wasserreinigungsanlage gereinigte Wasser kann teilweise aus dem Rohwasser und teilweise aus der feuchten Luft stammen, insbesondere in Abhängigkeit der Wassermenge in der feuchten Luft.

Besonders vorteilhaft ist das so gewonnene Wasser sehr rein, da aus dem Rohwasser in den Gasstrom nur reines Wasser verdunstet. Besonders vorteilhaft ist die maximale Temperatur in der Verdunstereinheit die Siedetemperatur von Wasser. Bei einem normalen Umgebungsdruck ist die Temperatur demnach maximal 100 °C. Demnach sind niedrige Temperaturen ausreichend, um das Wasser zu gewinnen. Die Energie hierfür kann insbesondere aus Sonnenenergie gewonnen werden. Besonders vorteilhaft wird bei diesem Wasserreinigungsverfahren der Einsatz von Chemikalien vermieden. Weiterhin sind die eingesetzten Vorrichtungen sehr wartungsarm, was die Energieeffizienz zusätzlich steigert, da keine Maintenance-Handlungen nötig sind.

Die Begriffe Wasserreinigung und Wasseraufbereitung werden hier synonym verwendet.

Eine erfindungsgemäße Vorrichtung zum Durchführen der Wasseraufbereitung umfasst eine Verdunstereinheit geeignet zum Verdunsten von reinem Wasser aus Rohwasser in die feuchte Luft und eine Wasseraufbereitungseinheit geeignet zum Abtrennen des reinen Wassers aus der feuchten Luft und somit ebenfalls zum Reinigen des Rohwassers.

Das Rohwasser kann Verunreinigungen enthalten. Diese Verunreinigungen können in der Verdunstereinheit vorteilhaft sehr energiearm abgetrennt werden. Als Rohwasser kann Wasser aus industriellen Prozessen, Grund- oder Oberflächenwasser oder auch Stadtwasser verwendet werden. Es ist sogar vorteilhaft möglich, Meerwasser zu verwenden. Das in der Wasseraufbereitungseinheit gewonnene reine Wasser kann direkt für weitere Prozesse, insbesondere als Edukt in der Elektrolyseeinheit, verwendet werden und muss nicht in zusätzlichen Aufreinigungsschritten gereinigt werden. Die Wassergewinnung ist somit vorteilhaft effizient möglich.

In einer vorteilhaften Ausgestaltung und Weiterbildung der Erfindung wird das Rohwasser mittels der Abwärme eines Elektrolyseurs in einem ersten Wärmetauscher vor dem Führen in die Verdunstereinheit erwärmt. Das Vorwärmen des Rohwassers mittels Abwärme aus einem weiteren industriellen Prozess senkt den Energiebedarf des Verfahrens zusätzlich und erhöht somit den Wirkungsgrad. Die Wärme wird insbesondere mit einem Flüssig-Flüssig-Wärmetauscher übertragen. Dieser arbeitet besonders effizient, sodass geringe Temperaturdifferenzen zwischen den Medien möglich sind.

In einer weiteren vorteilhaften Ausgestaltung und Weiterbildung der Erfindung liegt die Temperatur in der Verdunstereinheit in einem Bereich von wenigstens 40°C bis maximal 55 °C. Diese Temperaturen können insbesondere mittels Sonnenenergie in tropischen und subtropischen Regionen erzielt werden. Ein zusätzliches Heizen der Verdunstereinheit kann somit vorteilhaft vermieden werden, was das Verfahren sehr energieeffizient gestaltet. Zweckmäßigerweise liegt die Temperatur der Verdunstereinheit oberhalb der Eingangstemperatur der feuchten Luft.

In einer weiteren vorteilhaften Ausgestaltung und Weiterbildung der Erfindung wird als Wasseraufbereitungseinheit ein Kondensator, eine Absorptionseinheit, oder eine Adsorptionseinheit verwendet. Der Kondensator ist hier verfahrenstechnisch zu verstehen. In dem Kondensator wird entweder der Druck erhöht und/oder die Temperatur erniedrigt. Eine Druckerhöhung im Kondensator ist im subtropischen und tropischen Klima besonders vorteilhaft, da die Erniedrigung von Temperaturen energieintensiv ist und somit vermieden werden sollte.

Besonders vorteilhaft wird der Kondensator mit einem flüssigen Wärmemedium betrieben, welches mittels der Umgebungsluft gekühlt wird. Durch den Einsatz eines flüssigen Wärmeübertragungsmediums, kann die Temperaturdifferenz zwischen der Umgebungsluft und dem zu kühlenden Medium geringer sein, verglichen mit Kühlung mittels Umgebungsluft.

In einer besonders vorteilhaften Ausgestaltung und Weiterbildung wird in der Adsorptionseinheit als Adsorptionsmittel Kieselgel, ein Molsieb oder ein Zeolith verwendet.

In einer vorteilhaften Ausgestaltung und Weiterbildung der Erfindung wird die feuchte Luft mittels eines Gebläses in die Verdunstereinheit geführt. Vorteilhaft lässt sich mit dem Gebläse der Volumenstrom der feuchten Luft erhöhen, und somit eine größere Menge Wasser aus der feuchten Luft gewinnen.

In einer weiteren vorteilhaften Ausgestaltung und Weiterbildung der Erfindung kann das reine Wasser als Edukt-Wasser in einen Elektrolyseur geführt werden. Das Verdunsten des Rohwassers in den feuchten Luftstrom erfolgt nur von reinem Wasser. Verunreinigungen verbleiben im Rohwasser. Die Qualität des Wassers ist ausreichend gut, um es in Elektrolyseuren als Edukt-Wasser einzusetzen.

In einer weiteren vorteilhaften Ausgestaltung und Weiterbildung der Erfindung wird die Verdunstereinheit bei einem niedrigeren Druck betrieben als die Wasseraufbereitungseinheit. Dies wird technisch insbesondere durch ein geschlossenes System umgesetzt. Vorteilhaft führt ein niedriger Druck in der Verdunstereinheit zu einer höheren Molmenge an verdunstetem Wasser aus dem Rohwasser in den feuchten Luftstrom. Ein höherer Druck in der Wasseraufbereitungseinheit wiederum führt zu einem höheren Anteil an Kondensat, insbesondere an reinem Wasser. Diese Druckverhältnisse optimieren den Prozess vorteilhaft derart, dass die Energieeffizienz weiter steigt.

In einer weiteren vorteilhaften Ausgestaltung und Weiterbildung der Erfindung umfasst die Verdunstereinheit insbesondere eine Packung oder Füllkörper. Diese vergrößern die Oberfläche zwischen der feuchten Luft und dem Rohwasser, sodass ein besonders guter Stoffaustausch und ein besonders guter Wärmeaustausch möglich sind. Dies erhöht vorteilhaft die Effizienz der Wassergewinnung.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- Figur 1: eine Wassergewinnungsanlage mit einer Verdunstereinheit und einer Wasseraufbereitungseinheit;
- Figur 2: eine Wassergewinnungsanlage mit einer Verdunstereinheit, einer Wasseraufbereitungseinheit und einem thermisch isolierten Behältnis;
- Figur 3: eine schematische Übersicht über das Verfahren zur Wassergewinnung.

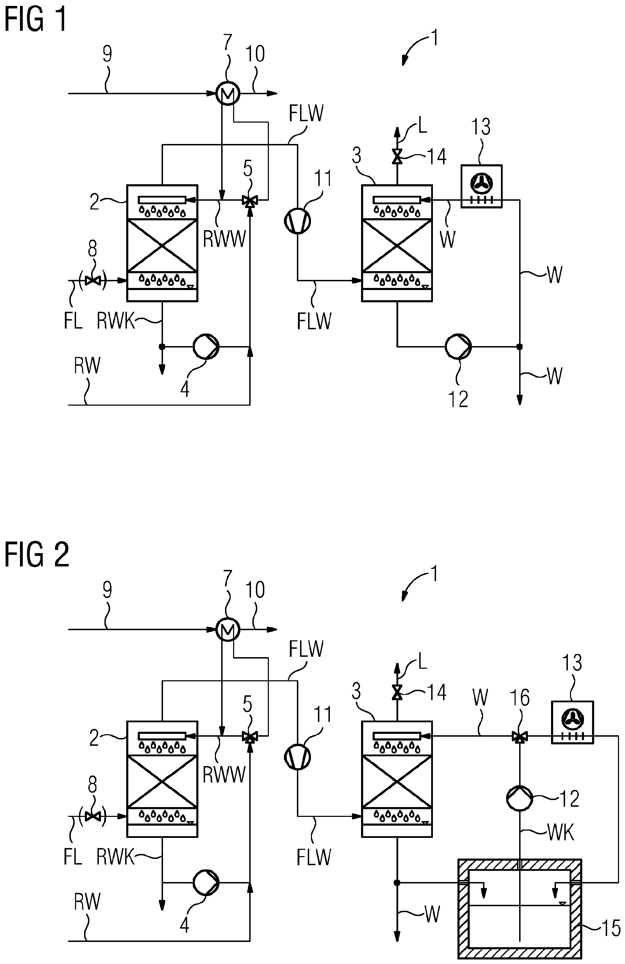

In einem ersten Ausführungsbeispiel, dargestellt in Figur 1, umfasst die Wassergewinnungsanlage 1 eine Verdunstereinheit 2 und eine Wasseraufbereitungseinheit 3. In die Verdunstereinheit 2 wird feuchte Luft FL geführt. Optional ist eine erste Drossel 5 vorhanden, mittels welcher die Höhe eines sich in der Verdunstereinheit 2 einstellenden Unterdrucks einstellbar ist. Typischerweise wird die feuchte Luft FL am Fuße der Verdunstereinheit 2, in anderen Worten am unteren Ende der Verdunstereinheit 2, zugeführt. Die feuchte Luft FL stellt typischerweise Umgebungsluft dar. Es ist aber ebenso denkbar, ein anderes Trägergas in die Verdunstereinheit 2 zuzuführen. Insbesondere können Abgase oder Gasmischungen, welche Stickstoff und/oder Sauerstoff umfassen, in die Verdunstereinheit 2 geführt werden.

Weiterhin wird in die Verdunstereinheit 2 warmes Rohwasser RWW zugeführt. Typischerweise wird dieses warme Rohwasser RWW am Kopf der Verdunstereinheit 2, in anderen Worten am oberen Ende der Verdunstereinheit 2, zugeführt. Das warme Rohwasser RWW wird in der Verdunstereinheit 2 im Gegenstrom zum feuchten Luftstrom FL geführt und in der Verdunstereinheit 2 verrieselt.

Insbesondere umfasst die Verdunstereinheit 2 Einbauten, sodass eine große Austauschoberfläche zwischen der flüssigen und der gasförmigen Phase vorliegt. Diese Einbauten können typischerweise Packungen oder Füllkörper umfassen. In der Verdunstereinheit 2 verdunstet ein Teil des Wassers aus dem Rohwasser RWW, welcher daraufhin mit dem feuchten Luftstrom mit Wasser FLW fortgeführt wird. Ein Teil des Wassers verbleibt in der flüssigen Phase des warmen Rohwasser RWW und wird als nun abgekühltes Rohwasser RWK aus der Verdunstereinheit 2 geführt.

Das kalte Rohwasser RWK kann nun entweder aus dem Prozess herausgeführt werden oder über eine erste Umwälzpumpe 4 zurück zur Verdunstereinheit 2 geführt werden.

Ein Teil des kalten Rohwassers RWK wird nicht zurück in die Verdunstereinheit 2 geführt, sondern verlässt die Wassergewinnungsanlage 1, um ein Aufkonzentrieren von Verunreinigungen, insbesondere von Salzen, zu verhindern.

Ein Anteil des kalten Rohwassers RWK, welcher zur Verdunstereinheit 2 zurückgeführt werden soll, kann über das erste Drei-Wege-Ventil 5 zu einem ersten Wärmetauscher 7 geführt werden. Dieser erste Wärmetauscher 7 wird von einem Fluidstrom 9, welchen es zu kühlen gilt, durchströmt. Insbesondere kann dieser Fluidstrom Wasser aus einem Elektrolyseur umfassen. Es ist aber ebenso denkbar, dass der Fluidstrom Wasser oder andere Fluide aus einem Prozess, bei dem Abwärme entsteht, umfasst. Weiterhin kann der Fluidstrom vorteilhaft ein Wärmeträgerfluid umfassen, insbesondere eine Wasser-Glykol-Mischung.

Das erste Drei-Wege-Ventil 5 ermöglicht ein Einstellen der Kühlleistung bzw. der Heizleistung des ersten Wärmetauschers 7.

Da kontinuierlich Wasser aus dem Rohwasser RW entzogen wird, muss Rohwasser RW dem Prozess kontinuierlich oder wenigstens semi-kontinuierlich zugeführt werden, um ein Austrocknen der Verdunstereinheit 2 zu verhindern.

Das Vorwärmen des Rohwassers in dem ersten Wärmetauscher 7 vor dem Zuführen zu der Verdunstereinheit 2 ist insbesondere in subtropischen und tropischen Klimaregionen sinnvoll. Bei 30 °C kommt es dort vor, dass die Umgebungsluft, welche besonders vorteilhaft als feuchte Luft FL hinzugeführt wird, vollständig mit Wasser gesättigt ist. Um dennoch Wasser aus dem Rohwasser entfernen zu können, muss die Temperatur in der Verdunstereinheit 2 oberhalb der Temperatur der feuchten Luft FL, insbesondere der Umgebungsluft, liegen. Die Verdunstereinheit 2 wird daher mittels des vorgewärmten Rohwassers RWW auf Temperaturen insbesondere oberhalb von Temperaturen der feuchten Luft FL, bevorzugt wenigstens auf 30°C, besonders bevorzugt in einen Bereich zwischen 40 °C bis 55 °C, aufgeheizt. Um eine ausreichende Menge an Wasser aus dem warmen Rohwasser RWW in die feuchte Luft zu verdunsten, sollte eine Temperaturdifferenz von wenigstens 5 K vorliegen, wobei die feuchte Luft die niedrigere Temperatur aufweist und die feuchte Luft FL als mit Wasser gesättigt oder nahezu gesättigt betrachtet werden kann.

Bei diesen Temperaturen in der Verdunstereinheit 2 kann die feuchte Luft FL, insbesondere die Umgebungsluft, Wasser aus dem vorgewärmten Rohwasser RWW aufnehmen. Besonders vorteilhaft wird mittels des ersten Wärmetauschers 7 ein Fluidstrom 9 gekühlt, während das Rohwasser erwärmt wird. Besonders vorteilhaft wird der Fluidstrom 9 aus einem Elektrolyseur gekühlt. Dieser Fluidstrom 9 wird dann zurück in die Elektrolyseeinheit geführt, um die Elektrolyseeinheit zu kühlen. In diesem Fall liegen die Temperaturen des Fluidstroms 9 insbesondere in einem Bereich zwischen 60°C und 100°C, besonders vorteilhaft in einem Bereich zwischen 60°C und 80°C.

Die mit Wasser angereicherte feuchte Luft FLW wird anschließend in eine Wasseraufbereitungseinheit 3 geführt. Die Wasseraufbereitungseinheit 3 ist insbesondere ein Kondenser, oder in anderen Worten ein Kondensator. Als Kondenser oder Kondensator wird hier eine verfahrenstechnische Vorrichtung verstanden, welche das Kondensieren eines Mediums ermöglicht.

Das Strömen der feuchten Luft mit Wasser FLW wird durch ein Gebläse 11 unterstützt. Besonders vorteilhaft kann das Gebläse 11 die Druckverhältnisse in der Verdunstereinheit 2 und der Wasseraufbereitungseinheit 3 derart beeinflussen, dass in der Verdunstereinheit 2 ein Unterdruck im Vergleich zur Wasseraufbereitungseinheit 3 vorliegt. Mittels der zweiten Drossel 14 kann ein Erhöhen des Drucks in dem Kondenser 3 in Kombination mit dem Betreiben des Gebläses 11 regelbar erfolgen. Dies ist besonders vorteilhaft, da einerseits in der Verdunstereinheit 2 eine größere Menge Wasser aus dem Rohwasser in die feuchte Luft FL verdunstet. Andererseits kann in der Wasseraufbereitungseinheit 3 ein größerer Anteil an Wasser kondensieren.

In den Kondenser 3 wird von oben Wasser W geführt, welches über Einbauten, insbesondere über Füllkörper, verrieselt wird. Die feuchte Luft mit dem Wasser FLW wird im Gegenstrom zum Wasser W geführt. Die Einbauten ermöglichen wiederum eine große Austauschfläche. Das Wasser, welches in den Kondenser 3 geführt wird, ist aber im Unterschied zur Verdunstereinheit 2, vorher abgekühlt worden. Das Wasser W wird also als kaltes Wasser in den Kondenser 3 geführt. Dies führt dazu, dass das Wasser, welches in dem feuchten Luftstrom FLW in den Kondenser 3 geführt wird, auskondensiert. Wird das Gebläse 11 derart betrieben, dass in der Verdunstereinheit 2 ein Unterdruck und in der Wassergewinnungseinheit 3 ein Überdruck herrscht, wird zusätzlich das Kondensieren bei relativ hohen Temperaturen ermöglicht, insbesondere den Temperaturen, die in der Verdunstereinheit 2 herrschen, insbesondere 40°C bis 55°C. Bei einer Temperatur des Wassers von 50 °C sollte der Druck in dem Kondenser daher insbesondere in einem Bereich um 2 bar plus minus 0, 5 bar liegen. Ist es dennoch nötig, die Temperatur des Kondensers zu erniedrigen, kann das Wasser mit einer Kühleinrichtung 13 auf eine vorbestimmte Temperatur gekühlt werden. Ein Erhöhen des Drucks im Kondenser 3 ist nur dann zweckmäßig, wenn die Umgebungstemperaturen des Kondensators wie in tropischen und subtropischen Regionen erhöht ist. Ist die Umgebungstemperatur niedrig, das bedeutet insbesondere unterhalb von 30°C, so ist ein Erhöhen des Drucks in dem Kondenser 3 nicht nötig.

In einem zweiten Ausführungsbeispiel der Figur 2 umfasst die Wassergewinnungsanlage 1 zusätzlich zur Verdunstereinheit 2 und zur Wasseraufbereitungseinheit 3 einen thermisch isolierten Behälter. Vorteilhaft kann so in warmen Klimaregionen das Wasser in der Nacht abgekühlt werden und in dem thermisch isolierten Behälter 15 gespeichert werden. Während des Tages kann dann das in der Nacht abgekühlte Wasser aus dem thermisch isolierten Behälter 15 zum Kühlen des Kondensers entnommen werden. Je nach Bedarf kann zusätzlich ein Abkühlen mit einer Kühlvorrichtung 13 erfolgen. Das auskondensierte Wasser kann besonders vorteilhaft einem Elektrolyseur als Edukt-Wasser zugeführt werden. In dem Elektrolyseur wird dieses Wasser in Wasserstoff und Sauerstoff zerlegt.

Alternativ zu einem Kondenser, kann die Wasseraufbereitungsseinheit 3 auch eine Adsorptionseinheit oder eine Absorptionseinheit sein. Als Absorptionsmittel zum Absorbieren von Wasser eignen sich wässrige Lösungen eines Salzes mit niedrigem Wasser-Dampfdruck, wie zum Beispiel LiBr, Ionische Flüssigkeiten oder organische Lösungen, die zur Absorption von Wasser neigen, insbesondere Glycole. Als Adsorptionsmittel zum Adsorbieren von Wasser in der Adsorptionseinheit eignen sich insbesondere Kieselgel, Molsiebe oder ein Zeolith. Eine Desorption des Wassers kann dann in Abhängigkeit der Temperatur und des Drucks entlang einer entsprechenden Adsorptionsisotherme erfolgen.

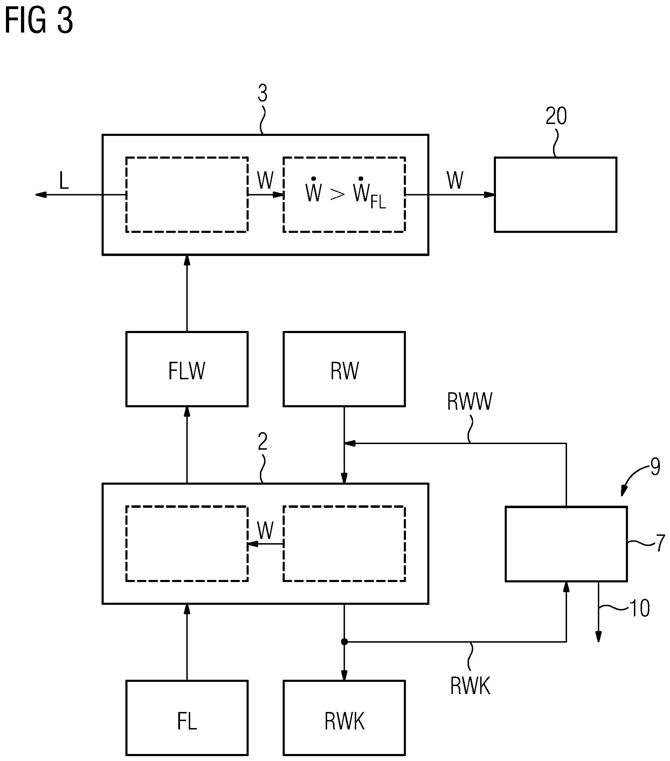

Figur 3 zeigt eine schematische Übersicht über das Verfahren zur Wassergewinnung mittels der Verdunstereinheit 2 und der Wasseraufbereitungseinheit 3. In die Verdunstereinheit 2 wird feuchte Luft FL und Rohwasser RW im Gegenstrom geführt. In der Verdunstereinheit 2 wird das Wasser W von dem Rohwasser RW hin zur feuchten Luft FL verdunstet. Somit verlässt die Verdunstereinheit mit Wasser beladene feuchte Luft FLW und abgekühltes Rohwasser RWK. Die mit Wasser beladene feuchte Luft FLW wird in eine Wasseraufbereitungseinheit 3 geführt. Dort wird insbesondere über Druck- und Temperaturunterschiede, das Wasser aus der feuchten Luft auskondensiert. Die Wasseraufbereitungseinheit 3 verlassen somit ein Wasserstrom und ein Luftstrom. Das Wasser kann vorteilhaft in einen Elektrolyseur 20 geführt werden. Das Rohwasser RW kann besonders vorteilhaft mittels eines Abwärmestroms in einem Wärmetauscher vorgewärmt werden und dann der Verdunstereinheit 2 zugeführt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Kühlen einer Elektrolyse und zur Wasseraufbereitung mit folgenden Schritten:
- Führen von feuchter Luft (FL) mit einer ersten Molmenge Wasser in eine Verdunstereinheit (2),
- Führen von Rohwasser (RW) in die Verdunstereinheit (2) im Gegenstrom zur feuchten Luft (FL), wobei in der Verdunstereinheit (2) eine Temperatur herrscht, die maximal der Siedetemperatur des Wassers entspricht,
- Verdunsten von reinem Wasser (W) aus dem Rohwasser (RW) in die feuchte Luft (FL), wobei sich das Rohwasser (RW) abkühlt,
- Führen des abgekühlten Rohwassers (RWK) in einen Wärmetauscher (7) und Führen eines Fluidstroms (9) der Elektrolyseeinheit (20) in den Wärmetauscher (7), wobei Wärme von dem Fluidstrom (9) auf das Rohwasser (RWW) übertragen wird,
- Führen der feuchten Luft mit dem reinen Wasser (FLW) in eine Wasseraufbereitungseinheit (3) und Abtrennen einer zweiten Molmenge des reinen Wassers aus dem feuchten Luftstrom mit Wasser (FLW) in der Wasseraufbereitungsseinheit (3), wobei eine nach der Abtrennung der zweiten Molmenge Wasser in der Luft verbleibende dritte Molmenge größer als die erste Molmenge Wasser ist,
- Zurückführen des vorgewärmten Rohwassers (RWW) in die Verdunstereinheit (2),
- Zurückführen des abgekühlten Fluidstroms (10) in die Elektrolyseeinheit (20).

2. Verfahren nach Anspruch 1, wobei die Temperatur in der Verdunstereinheit (2) in einem Bereich von wenigstens 40°C bis maximal 55°C liegt.

3. Verfahren nach einem der vorhergehenden Ansprüche, wobei als Wasseraufbereitungseinheit ein Kondenser (3), eine Absorptionseinheit oder eine Adsorptionseinheit verwendet wird.

4. Verfahren nach Anspruch 3, wobei als Adsorptionsmittel Kieselgel, ein Zeolith oder ein Molsieb verwendet wird.

5. Verfahren nach Anspruch 3 oder 4, wobei die Regeneration des Adsorptionsmittels druck- und/oder temperaturgetrieben durchgeführt wird.

6. Verfahren nach Anspruch 3, wobei der Kondenser (3) mittels eines Wärmemediums betrieben wird, welches mittels Umgebungsluft gekühlt wird.

7. Verfahren nach einem der vorhergehenden Ansprüche, wobei zweite Molmenge reinen Wassers wenigstens teilweise als Edukt in den Elektrolyseur (20) geführt wird.

8. Verfahren nach einem der vorhergehenden Ansprüche, wobei die Verdunstereinheit (2) bei einem niedrigeren Druck als die Wasseraufbereitungseinheit (3) betrieben wird.

9. Vorrichtung (1) zur Wassergewinnung und Wasseraufbereitung zum Durchführen eines Verfahrens gemäß einem der Ansprüche 1 bis 8 umfassend eine Verdunstereinheit (2) geeignet zum Verdunsten von reinem Wasser (W) aus Rohwasser (RW) in einen feuchten Luftstrom (FL) und eine Wasseraufbereitungseinheit (3) geeignet zum Abtrennen des reinen Wassers (W) aus der feuchten Luft (FLW).

10. Vorrichtung nach Anspruch 9, mit einem ersten Wärmetauscher (7) geeignet zum Erwärmen des Rohwassers (RW) mittels der Abwärme eines Elektrolyseurs (20) vor dem Führen in die Verdunstereinheit (2).

11. Vorrichtung nach einem der Ansprüche 9 oder 10, wobei der erste Wärmetauscher (7) ein Flüssig-Flüssig-Wärmetauscher ist.

12. Vorrichtung nach einem der Ansprüche 9 bis 11, wobei die Verdunstereinheit (2) eine Packung oder Füllkörper umfasst.
